# EUROPÄISCHE PATENTSCHRIFT

(11) **EP 4 110 060 B1**
(45) Veröffentlichungstag und Bekanntmachung des Hinweises auf die Patenterteilung: **14.10.2026**
(21) Anmeldenummer: 21706580.4
(22) Anmeldetag: 22.02.2021
(51) Int. Cl.: A01N 53/00, A01N 25/28, A01P 7/04

(54) **VERKAPSELTE PYRETHROIDE MIT VERBESSERTER WIRKSAMKEIT BEI BODEN- UND BLATTANWENDUNGEN**
ENCAPSULATED PYRETHROIDS WITH IMPROVED ACTIVITY IN SOIL AND LEAF APPLICATIONS
PYRETHROÏDE ENCAPSULÉ À EFFICACITÉ AMÉLIORÉE DANS DES APPLICATIONS AU SOL ET FOLIAIRES

(30) Priorität: 24.02.2020 EP 20159164
(43) Veröffentlichungstag der Anmeldung: 04.01.2023
(73) Patentinhaber: Bayer Aktiengesellschaft, 51373 Leverkusen (DE)
(72) Erfinder: EGGER, Holger, 50825 Köln (DE); PERIS URQUIJO, Gorka, 50737 Köln (DE); HAMBROCK, Ralf, 40789 Monheim (DE); RIST, Marc Andre, 40549 Düsseldorf (DE); COMPANYS GARCIA, Veronica, 40764 Langenfeld (DE); HITZBERGER, Bernhard, 40724 Hilden (DE)
(74) Vertreter: BIP Patents
(86) Internationale Anmeldenummer: PCT/EP2021/054290
(87) Internationale Veröffentlichungsnummer: WO 2021/170527

(56) Entgegenhaltungen:
- EP-A1- 2 589 290
- WO-A1-00/13503
- WO-A1-00/13504
- WO-A1-2014/009269
- WO-A1-2019/229060
- WO-A1-97/44125
- WO-A2-96/33611

## Beschreibung

### Technisches Problem/Aufgabe:

Die vorliegende Erfindung betrifft wässrige Kapselsuspensionskonzentrate auf Basis verschiedener Pyrethroide, deren Herstellung sowie deren Anwendung als agrochemische Formulierung, insbesondere zur Bodenapplikation.

### Stand der Technik:

Pyrethroide sind eine etablierte Wirkstoffklasse und in verschiedensten Formuliertypen für eine große Bandbreite an Anwendungen erhältlich, wie beispielsweise Blattanwendungen, Bodenanwendungen, Oberflächenbehandlungen, imprägnierte Materialien, etc.

Speziell für Bodenanwendungen gibt es beispielsweise Karate^{®} (Lamda-Cyhalothrin als GR-Formulierung), Force^{®} (Tefluthrin GR) oder Belem^{®} (Cypermethrin GR) vor allem gegen Maiswurzelbohrer und ähnliche Spezies. Im Gegensatz zu diesen bekannten festen Formulierungen sind flüssige Formulierungen in diesem Bereich unüblich. Dennoch ist ein Nachteil der festen Formulierungen, dass meist eine relativ hohe Aufwandmenge bei niedriger Beladung der Formulierung notwendig ist. In der Literatur ist ausführlich beschrieben, dass sich Pflanzenschutzwirkstoffe erfolgreich mikroverkapseln lassen, z.B. in EP0214936. Viele Dokumente nennen auch explizit Pyrethroide als potentielle Wirkstoffe, z.B. US 5846554, WO 1997/44125, WO 2016169683, EP183999. Außerdem gibt es beispielsweise eine mikroverkapselte Lambda-Cyhalothrin (Karate Zeon) sowie eine Deltamethrin-Formulierung (DelCaps CS 050) jeweils für Blattanwendungen auf dem Markt.

Einige Patente nennen zusätzlich auch die potentielle Anwendung von Kapselsuspensionen für Bodenanwendungen, z.B. WO2016169683, WO2016202659, wobei auch Pyrethroide als potentielle Wirkstoffe genannt werden. Darüber hinaus ist wissenschaftliche Literatur zur generellen Interaktion von Mikrokapseln im Boden zu finden.

WO2011042495 nennt z.B. explizit die Verbesserung der Bodenmobilität von schlecht-löslichen Pflanzenschutzwirkstoffen, unter anderem Deltamethrin, durch den Einsatz von Polymerpartikeln. Jedoch werden in der WO2011042495 keine biologischen Daten gezeigt, so dass keinerlei Hinweise auf den Zusammenhang von Bodenbeweglichkeit, biologischer Wirksamkeit und/oder Bioverfügbarkeit des Wirkstoffes gegeben werden. Die WO 2018/141594 beschreibt die Zugabe eines Bodenmobilisierers (soil mobilizer) zu einer Formulierung eines wasser-unlöslichen Herbizids. Die Substanz ist ein Tensid des Typs Alkyl C₁-C₃ -phenyl-ethoxylate (C₂-C₆-EO)₁₋₁₀₀. Das Tensid kann in die Formulierung eingebaut (beispielsweise in einem SC) oder als Tank-Mix Additiv zugegeben werden. Ferner werden in der WO 2018/141594 prinzipiell auch mikroverkapselte Herbizid-Formulierungen als mögliche nutzbare Formulierung genannt, was wiederum nicht mit Daten hinterlegt ist.

In der WO 2017/149069 werden polyether-modifizierte kurzkettige Siloxane als zusätzliche Adjuvantien für Bodenanwendungen beschrieben, um die agronomische Ausbeute unabhängig von Formuliertyp und physikalischen Eigenschaften des Wirkstoffs zu steigern.

Die WO 01/94001 beschreibt Mikrokapseln, welche zusätzlich einen grenzflächen-modifizierenden Inhaltsstoff besitzen, wobei auch Beispiele mit Pyrethroiden zu finden sind. Die Substanzen werden an die Mikrokapselhülle chemisch gebunden, um die Eigenschaften der Kapseln im Boden zu verbessern. Es wird gezeigt, dass somit die Bodenmobilität verbesserte werden kann.

Die WO 00/13503 beschreibt Mikrokapselsuspensionen von beta-Cyfluthrin zur verlängerten Freisetzung des Wirkstoffes.

### Nachteil am Stand der Technik

Der Stand der Technik beschreibt zwar die Möglichkeit Pyrethroide für Bodenapplikation als Granulatformulierungen bereitzustellen, jedoch weisen diese Formulierungen lediglich eine geringe Wirkstoffkonzentration auf, so dass eine hohe Aufwandmenge erforderlich ist, was auch zu einer hohen Belastung des Bodens durch Adjuvantien und andere Formulierhilfsstoffe führt.

Ferner beschreibt der Stand der Technik auch diverse Möglichkeiten, Pyrethroide in Form von verkapselten Formulierungen als flüssige Formulierungen bereitzustellen. Es ist jedoch unklar, inwiefern diese für schlecht bodenverfügbare Wirkstoffe wie Deltamethrin, das in festen Formulierungen für Bodenanwendungen nicht anwendbar ist, überhaupt geeignet ist.

Darüberhinaus beschreibt der Stand der Technik keine Formulierung, welche sowohl für Boden- als auch für Blattanwendungen geeignet ist, insbesondere sind keine Formulierungen bekannt, die eine effiziente Bodenanwendung von Deltamethrin erlauben.

Zusammenfassend kann festgestellt werden, dass derzeit die Fachleute auf dem Gebiet die Auffassung vertreten, dass insbesondere Deltamethrin, für die Bodenanwendung nicht geeignet ist.

### Aufgabe

Die Aufgabe der vorliegenden Erfindung bestand daher in der Bereitstellung einer geeigneten Formulierung mit möglichst hoher Wirkstoffbeladung bzw. geringer Aufwandmenge, die universell für pyrethroide Wirkstoffe, insbesondere aber für Deltamethrin, eine ausreichende Bioverfügbarkeit bei gleichzeitig ausreichender Langzeitwirkung für Bodenapplikationen gewährleistet.

Ferner bestand die Aufgabe darin, eine Formulierung bereitzustellen, die den Boden nur mit einer geringen Menge an Formulierhilfsstoffen und Inertmaterialien belastet.

Desweiteren bestand die Aufgabe darin, eine Formulierung bereitzustellen, welche sowohl für Boden- als auch für Blattanwendungen geeignet ist.

### Lösung

Die Aufgabe wurde mit den erfindungsgemäßen Kapselsuspensionskonzentraten (CS) gelöst. Überraschenderweise wurde gefunden, dass die erfindungsgemäße Formulierung universell für die Klasse der Pyrethroide, unabhängig von deren physiko-chemischen Eigenschaften, für Bodenanwendungen geeignet ist. Die CS der vorliegenden Erfindung gewährleisten sowohl eine ausreichend hohe Verfügbarkeit des Wirkstoffes als auch hinreichende Wirkdauer. Überraschenderweise wurde gefunden, dass die erfindungsgemäße Formulierung unabhängig von den Bodenbedingungen, wie Feuchte und Anteil organischer Bestandteile im Boden, gute biologische Wirksamkeit zeigt.

Darüber hinaus konnte gezeigt werden, dass die erfindungsgemäßen Kapselsuspensionskonzentrate auch für Blattanwendungen geeignet sind.

### Detaillierte Erfindung

Gegenstand der vorliegenden Erfindung sind daher Kapselsuspensionskonzentrate enthaltend
A) eine teilchenförmige disperse Phase, enthaltend
   1) ein Reaktionsprodukt aus mindestens einer Verbindung mit gegenüber Isocyanat reaktiven Gruppen a1.1) und einem Isocyanat oder Isocyanat-Gemisch a1.2)
   2) ein Pyrethroid a2.1) in einem organischen, wasserunlöslichen Lösemittel a2.2),
   3) ein oder mehrere Zusatzstoffe a3.1) ausgewählt aus der Gruppe bestehend aus den Alkyl-Ethoxylaten und Alkyl-Propoxy-Ethoxylaten mit einer endständigen Hydroxylfunktion und
B) eine flüssige, wässrige Phase, enthaltend mindestens ein Schutzkolloid b1.1) sowie gegebenenfalls weitere Zusatzstoffe b1.2) ausgewählt aus der Gruppe bestehend aus den Konservierungsmitteln, Entschäumern, Kältestabilisatoren, Verdickern, pH-Stabilisatoren und Neutralisationsmitteln.

wobei die Teilchen der dispersen Phase A) bevorzugt eine mittlere Partikelgröße zwischen 1 und 50 µm aufweisen
und wobei die Kapselsuspensionskonzentrate erhältlich sind durch Reaktion der Komponenten a1.1) und a1.2) ausgehend von einer Emulsion enthaltend die Komponenten a1.1), a1.2), a2.1), a2.2), a3.1), b1.1)
und b1.2), wobei
der Anteil von a1.2) zwischen 0,5 und 2 Gew.%,
der Anteil an agrochemischem Wirkstoff a2.1) zwischen 5 und 15 Gew.%,
der Anteil an organischem Lösemittel a.2.2) zwischen 25 und 40 Gew.%,
der Anteil an Zusatzstoff a3.1) zwischen 2 und 5 Gew.%
der Anteil an Schutzkolloide b1.1) zwischen 0,2 und 1 Gew.%, und
der Anteil an Zusatzstoffen b1.2) zwischen 0,3 und 3 Gew. % liegt.

Sofern a1.1. kein zugesetztes Amin oder Alkohol ist, ist a.1.1 das durch Hydrolyse des Isocyanats freigesetzte Amin.

Verbindungen gemäß a1.1. können auch als Quervernetzer bezeichnet werden. Somit sind Quervernetzer im Sinne der vorliegenden Erfindung Verbindungen gemäß a1.1. sofern nicht anders definiert.

Ferner ist Gegenstand der vorliegenden Erfindung die Verwendung der erfindungsgemäßen Kapselsuspensionskonzentrate für die Bodenanwendung von Pyrethroiden, insbesondere von Deltamethrin.

Die Partikelgröße wird nach CIPAC (CIPAC = Collaborative International Pesticides Analytical Council; www. cipac. org) Methode MT 187 bestimmt. Dabei wird die Partikelgrößenverteilung mittels Laserbeugung bestimmt. Eine repräsentative Menge Probe wird dafür bei Umgebungstemperatur in entgastem Wasser dispergiert (Selbstsättigung der Probe), mit Ultraschall behandelt (üblicherweise 60 s) und anschließend in einem Gerät der Malver Mastersizer Serie vermessen. Das gestreute Licht wird bei verschiedenen Winkeln mit Hilfe eines Multi-Element Detektors gemessen und die zugehörigen numerischen Werte aufgezeichnet. Mit Hilfe des Fraunhofer Modells wird aus den Streudaten der Anteil bestimmter Größenklassen berechnet und daraus eine volumengewichtete Partikelgrößenverteilung berechnet. Angegeben werden üblicherweise der d50 bzw. d90 Wert = Wirkstoff-Partikelgröße (50 bzw. 90% aller Volumenpartikel). Die mittlere Partikelgröße bezeichnet den d50 Wert.

Die Teilchen der dispersen Phase A) weisen eine Partikelgröße d50 auf, die vorzugsweise zwischen 1 und 50 µm (Mikrometer), weiter bevorzugt zwischen 1 bis 20 µm, und ganz besonders bevorzugt zwischen 2 und 15 µm liegt.

Ebenfalls Gegenstand der vorliegenden Erfindung ist ein Verfahren zur Herstellung der erfindungsgemäßen Kapselsuspensionskonzentrate, welches durch folgende Verfahrensschritte gekennzeichnet ist:
I. Herstellung der organischen Phase A)
II. Herstellung der wässrigen Phase B)
III. Herstellung einer Emulsion von A) in B)
IV. Ggf. Zugabe der Komponente a1.1) (wenn a1.1. nicht Wasser ist)
V. Temperschritt
VI. Finalisierung

In Schritt (I) wird der Wirkstoff a2.1) und die weiteren Zusatzstoffe a3.1) in dem organischen Lösemittel a2.2) unter Rühren gelöst. Schritt (I) des erfindungsgemäßen Verfahrens wird im Allgemeinen bei Temperaturen zwischen 0 °C und 80 °C, bevorzugt zwischen 0 °C und 50 °C, und besonders bevorzugt zwischen 2 °C und 40 °C durchgeführt. Anschließend wird das Isocyanat a1.2) zu der entstandenen Mischung gegeben. Die Zugabe kann beispielsweise durch direkte Zugabe in die Mischungen oder durch kontinuierliche Zudosierung mit Hilfe für derartige Zwecke übliche Apparate wie beispielsweise eines statischen Mischers kurz vor der Zusammenfügung mit der wässrigen Phase B) erfolgen.

In Schritt (II) wird mindestens ein Schutzkolloid b1.1) und gegebenenfalls weitere Zusatzstoffen b1.2) unter Rühren in Wasser gelöst. Dies erfolgt im Allgemeinen bei Temperaturen zwischen 0 °C und 80 °C, bevorzugt zwischen 15 °C und 80 °C.

In Schritt (III) wird die organische Phase A) zur wässrigen Phase B) gegeben und eine Emulsion hergestellt. Zur deren Herstellung können alle für derartige Zwecke üblichen Apparate eingesetzt werden, die starke Scherkräfte erzeugen. Beispielhaft genannt seien Rotor-Stator-Mischer und Strahldispergatoren. Schritt (III) wird im Allgemeinen bei Temperaturen zwischen 0 °C und 80 °C, bevorzugt zwischen 10 °C und 75 °C durchgeführt. Die Herstellung der Emulsion kann sowohl batch-weise als auch kontinuierlich erfolgen.

In Schritt (IV) wird die aus Schritt (III) erhaltene Emulsion in Schritt (IV) des erfindungsgemäßen Verfahrens unter Rühren mit einem Diamin, Polyamin, Dialkohol, Polyalkohol und/oder Aminoalkohol a1.1) versetzt. Dabei werden die Amin- bzw. Alkohol-Komponenten a1.1) zweckmäßigerweise in wässriger Lösung zugefügt. Bevorzugt wird jedoch im erfindungsgemäßen Verfahren ausschließlich Wasser als Komponente a1.1) verwendet, was wie schon oben erwähnt, im Rahmen der vorliegenden Erfindung bedeuten soll, dass die Komponente a1.1. durch Hydrolyse des Isocyanats mit Wasser entsteht. "Wasser" steht hier also für das Hydrolyseprodukt (Amin).

In Schritt (V) wird die Mischung für eine gewisse Zeit unter Rühren getempert, um eine vollständige Abreaktion zu gewährleisten. Im Allgemeinen beträgt der Zeitraum 0 bis 24 Stunden, bevorzugt 0,5 bis 8 Stunden, besonders bevorzugt 1 bis 5 Stunden, wobei die Reaktion vorzugsweise bei Temperaturen zwischen 0 °C und 80 °C durchgeführt wird, bevorzugt zwischen 20 °C und 75 °C.

In Schritt (VI) wird die Kapselsuspension nach Beendigung der zur Kapselbildung führenden Reaktion auf Raumtemperatur gebracht und anschließend gegebenenfalls unter Rühren noch mit Zusatzstoffen b1.2) versetzt. Die Zusatzstoffe b1.2) können prinzipiell je nach Bedarf in Schritt (II) oder Schritt (VI) zugegeben werden.

Das erfindungsgemäße Verfahren wird vorzugsweise unter Atmosphärendruck durchgeführt.

Bei der Durchführung des erfindungsgemäßen Verfahrens kann das Verhältnis von NCO-Gruppen aus der Komponente a1.2) zu NCO-reaktiven Gruppen aus der Komponente a1.1) in einem bestimmten Bereich variiert werden. Vorzugsweise wird auf 1 mol an Isocyanat 0 bis 1,5 Äquivalente an zugesetzter Amin- bzw. Alkohol-Komponente eingesetzt. Bevorzugt wird kein Quervernetzer eingesetzt, d.h. a1.1) entsteht durch Hydrolyse des Isocyanats mit Wasser (bzw. ist "Wasser" nach obiger Definition).

In einer alternativen Ausführungsform wird auf 1 mol an Isocyanat 0,1 bis 1,5 Äquivalente an zugesetzter Amin- bzw. Alkohol-Komponente eingesetzt.

Aus der Menge der eingesetzten hüllenbildenden Inhaltsstoffe a1.1) und a.1.2) und der erhaltenen Partikelgröße lässt sich eine theoretische Wandstärke der Kapseln aus der mittleren Teilchengröße (d50) der Kapseln und der eingesetzten Menge an hüllbildenden Materialien berechnen, wobei die Dichte des Polymers als 1 (1g/cm³) gesetzt wird. Diese berechnete Wandstärke der Kapseln der erfindungsgemäßen Kapselsuspensionskonzentrate liegt vorzugsweise zwischen 0,001 und 4 µm, weiter bevorzugt zwischen 0,01 und 2 µm, und besonders bevorzugt zwischen 0,01 und 1 µm.

Bei der Umsetzung von a1.1) mit a1.2) ist die Summe der zahlenmittleren Funktionalität X an Isocyanat-Gruppen und gegenüber Isocyanat reaktiven Gruppen 2 ≤ X ≤ 6, bevorzugt 2 ≤ X ≤ 4,5, besonders bevorzugt 2,0 ≤ X ≤ 3,5 und ganz besonders bevorzugt 2,2 ≤ X ≤ 2, 8.

Die "zahlenmittlere Funktionalität X" als Merkmal im erfindungsgema0en Verfahren wird wie folgt veranschaulicht. Die höhere funktionale Verbindung ist hierbei entscheidend, wobei die Differenz der niedriger funktionalen Verbindung minus 2 zur hoher funktionalen Verbindung addiert wird. Hat beispielsweise a1.1) eine (durchschnittliche) Funktionalität von 2,1 und a1.2) von 2,6 so gilt: 2, 1-2=0,1. Diese Differenz wird 2,6 zugerechnet: 2,6 + 0, 1 = 2,7. So ist die zahlenmittlere Funktionalität 2,7. Alternativ gilt, wenn al) 2,7 und a2) 2,3 ist, so ergibt sich die zahlenmittlere Funktionalität von 2,7 + 2,3-2 = 3,0.

Als Verbindungen mit gegenüber Isocyanat reaktiven Gruppe a1.1) kommen aliphatische, aromatische, cyclische und alicyclische primäre und sekundäre Diamine sowie Polyamine in Betracht. Als Beispiele genannt seien Ethylendiamin (EDA), Diethylentriamin (DETA), Monoisopropylamin, 4-Aminopyridin (4-AP), n-Propylamin, Ethylen- oder Propylenimin-basiertes Polyaziridin, Triethylenetetraamin (TETA), Tetraethylenpentamin, 2,4,4'-Triaminodiphenylether, Bis(hexamethylen)-triamin, Trimethylendipiperidin (TMDP), Guanidincarbonat (GUCA), Phenylendiamin, Toluendiamin, Pentamethylenhexamin, 2,4-Diamino-6-methyl-1,3,5-triazine, 1,2-Diaminocyclohexan, 4,4'-Diaminodiphenylmethan, 1,5-Diaminonaphthalenisophorondiamin, Diaminopropan, Diaminobutan, Piperazin, Aminoethylenepiperazin (AEP), Poly(propyleneglycol)-bis(2-aminopropylether) oder o,o'-Bis(2-aminopropyl)polypropylenglycol-blockpolyethylenglycol-blockpolypropylenglycol, Hexamethlyendiamin, Bis-(3-aminopropyl)amin, Bis-(2-methylaminoethyl)methylamin, 1,4-Diaminocyclohexan, 3-Amino-1-methyl-aminopropan, N-Methyl-bis-(3-aminopropyl) amin, 1,4-Diamino-n-butan und 1,6 Diamino-n-hexan. Bevorzugt sind Hexamethlyendiamin sowie Diethylentriamin.

Als Verbindungen mit gegenüber Isocyanat reaktiven Gruppen a1) kommen ebenfalls primäre und sekundäre, aliphatische sowie aromatische Dialkohole und Polyalkohole in Frage. Als Beispiele seien genannt: Ethandiol, Propandiol (1,2), Propandiol (1,3), Butandiol (1,4), Pentandiol (1,5), Hexandiol (1,6), Glycerin und Diethylenglykol. Bevorzugt werden Glycerin und 1,2-Propandiol verwendet.

Als Verbindungen mit gegenüber Isocyanat reaktiven Gruppen a1.1) kommen auch Aminoalkohle in Betracht. Als Beispiel seien Triethanolamin, Monoethanolamin, Triisopropanolamin, Diisopropylamin, N-Methylethanolamin, N-Methyl-diethanolamin genannt.

In einer ganz besonders bevorzugten Ausführungsform wird ausschließlich Wasser als isocyanatreaktive Komponente a1.1) verwendet. Dieses reagiert in-situ mit dem Isocyanat (Poly/Di) zu einem Amin (Poly/Di), das seinerseits dann isocyanatreaktiv ist.

Ebenso können Abmischungen von a1.1) eingesetzt werden.

Bei dem Isocyanat bzw. dem Isocyanat-Gemisch a1.2) handelt es sich um ein Mono, Di- und/oder Polyisocyanat-Gemisch bzw. um ein Reaktionsprodukt von Isocyanat-Gemischen. Geeignete Verbindung a1.2) sind beispielsweise 1,4-Butylendiisocyanat, 1,6-Hexamethylendiisocyanat (HDI), Isophorondiisocyanat (IPDI), 2,2,4 und/oder 2,4,4-Trimethylhexamethylendiisocyanat, die isomeren Bis-(4,4'-isocyanatocyclohexyl)methane (H12-MDI) oder deren Mischungen beliebigen Isomerengehalts, 1,4-Cyclohexylendiisocyanat, **4-Isocyanatomethyl-1,** 8-octandiisocyanat (Nonantriisocyanat), 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI), 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Modifizierungen wie etwa Allophanat-, Uretdion-, Urethan-, Isocyanurat-, Biuret-, Iminooxadiazindion- oder Oxadiazintrionstruktur enthaltende Verbindungen basierend auf den genannten Diisocyanaten geeignete Bausteine der Komponente a1.2) sowie mehrkernige Verbindungen wie beispielsweise polymeres MDI (pMDI wie etwa PAPI-27 von Dow oder Desmodur^{®} 44V20 Typen von der Covestro AG) sowie Kombinationen von den genannten.

Bevorzugt werden Modifizierungen mit einer Isocyanat (NCO)-Funktionalität von 2 bis 6, bevorzugt von 2,0 bis 4,5 und besonders bevorzugt von 2,3 bis 4,2 und ganz besonders bevorzugt von 2,3 bis 3,8 eingesetzt. Insbesondere bevorzugt ist eine NCO-Funktionalität von 2,4 bis 3.

Bevorzugt werden zur Modifizierung Diisocyanate aus der Reihe HDI, IPDI, H12-MDI, TDI und MDI verwendet. Besonders bevorzugt sind HDI, TDI und MDI sowie deren Derivate. Insbesondere bevorzugt wird MDI als polymeres MDI wie beispielsweise PAPI-27 eingesetzt.

Der bevorzugte NCO-Gehalt der Isocyanat bzw. Polyisocyanat bzw. Abmischung liegt zwischen 3 und 50 Gew. -%, besonders bevorzugt zwischen 10 und 40 Gew. -%, besonders bevorzugt zwischen 15 % und 35 Gew. -% und ganz besonders bevorzugt zwischen 20 und 35 Gew. -%. Es können die Isocyanatgruppen auch partiell oder ganz bis zu ihrer Reaktion mit den Isocyanat-reaktiven Gruppen blockiert vorliegen, so dass sie nicht unmittelbar mit der Isocyanat-reaktiven Gruppe reagieren können. Dies gewährleistet, dass die Reaktion erst bei einer bestimmten Temperatur (Blockierungstemperatur) stattfindet. Typische Blockierungsmittel finden sich im Stand der Technik und sind so ausgewählt, dass sie bei Temperaturen zwischen 60 und 220 °C, je nach Substanz, von der Isocyanat-Gruppe wieder abspalten und erst dann mit der Isocyanat- reaktiven Gruppe reagieren. Es gibt Blockierungsmittel, die in das Polyurethan eingebaut werden und auch solche, die als Lösemittel bzw. Weichmacher im Polyurethan bleiben oder aus dem Polyurethan ausgasen. Man spricht auch von blockierten NCO-Werten. Ist in der Erfindung von NCO-Werten die Rede, so ist dies immer auf den unblockierten NCO-Wert bezogen. Meist wird bis zu < 0,5% blockiert. Typische Blockierungsmittel sind beispielsweise Caprolactam, Methylethylketoxim, Pyrazole wie beispielsweise 3,5-Dimethyl-1, 2-pyrazol oder Pyrazol, Triazole wie beispielsweise 1,2,4-Triazol, Diisopropylamin, Diethylmalonat, Diethylamin, Phenol oder dessen Derivate oder Imidazol.

Die Komponente a1.2) kann auch als Mischung von obigen Verbindungen oder auch als Prepolymer verwendet werden. Hierbei erfolgt die Umsetzung beispielsweise einer Isocyanat-Gruppen enthaltende Verbindung mit einem NCO-Gehalt zwischen 3 und 50 Gew. -%, mit gegenüber isocyanatreaktive Gruppen enthaltende Verbindungen mit einer OH-Zahl zwischen 10 mg KOH/g und 150 mg KOH/g.

Besonders bevorzugt wird nur ein Isocyanat und keine Mischung verwendet.

Als organische Solventien a2.2) kommen dabei alle üblichen organischen Lösungsmittel in Betracht, die einerseits mit Wasser nicht mischbar (Phasentrennung) sind, andererseits aber die eingesetzten agrochemischen Wirkstoffe gut lösen. Bevorzugt genannt seien aliphatische und aromatische, gegebenenfalls halogenierte Kohlenwasserstoffe, wie Toluol, Xylol, Solvesso 100, 100ND, 150, 150 ND oder 200, 200 ND (Mineralöl), Tetrachlormethan, Chloroform, Methylenchlorid und Dichlorethan, außerdem Ester, wie Ethylacetat, und Alkancarbonsäureamide, wie Octancarbonsäuredimethylamid und Decancarbonsäuredimethylamid. Des Weiteren kommen Pflanzenöle sowie modifizierte Öle (bspw. durch Methylierung, Ethylierung und auch Hydrierung und Hydratisierung) auf Basis beispielsweise von Rapskeimöl, Maiskeimöl, Kokosöl oder ähnlichen. Besonders bevorzugt wird Mineralöl verwendet, ganz besonders bevorzugt Lösungsmittel auf Basis einer von Dialkylnaphthalin (wie beispielsweise Diisopropylnaphthalin), sowie Mischungen aus 1-Methyl-, 2-Methylnaphtalen und Naphthalen (beispielsweise Solvesso 200 ND Typen, CAS Nr.: 64742-94-5).

Im Prinzip kann auch eine Mischung aus organischen Solventien a2.2) verwendet werden. Bevorzugt ist die Verwendung nur eines Lösemittels.

Die Zusatzstoffe a3.1) der erfindungsgemäßen Kapselsuspensionskonzentrate sind ausgewählt aus der Gruppe bestehend aus den Alkyl-Ethoxylaten und Alkyl-Propoxy-Ethoxylaten mit einer endständigen Hydroxylfunktion. Beispielhaft seien hier Break-Thru ^{®} Vibrant, Synergen W 06, Genapol EP 2584, Genapol X 060 genannt.

Die wässrige Phase B) der erfindungsgemäßen Kapselsuspensionskonzentrate enthält neben Wasser mindestens ein Schutzkolloid b1.1) und weitere Zusatzstoffe b1.2) ausgewählt aus den Gruppen der Konservierungsmittel, Entschäumer, Kältestabilisatoren, Verdicker, pH-Stabilisatoren und Neutralisationsmittel.

Als Schutzkolloide b1.1) (Emulgator für die disperse Phase A) kommen alle üblicherweise für diesen Zweck eingesetzten Substanzen in Betracht. Bevorzugt genannt seien natürliche und synthetische wasserlösliche Polymere, wie Gelatine, Stärke und Cellulose-Derivate, insbesondere Celluloseester und Celluloseether, wie Methylcellulose, ferner Polyvinylalkohole, teilhydrolysierte Polyvinylacetate (< 98 % Verseifungsgrad), Ligninsulfonate (wie Borresperse^{®} NA, REAX^{®} 88 oder Kraftsperse 25 S), modifizierte Naphthalinsulfonate (wie etwa Morwet^{®} D-425), Polyvinylpyrrolidone und Polyacrylamide. Besonders bevorzugt werden Polyvinylalkohole, teilhydrolysierte Polyvinylacetate sowie Ligninsulfonate verwendet. Ganz besonders bevorzugt Polyvinylalkohole, teilhydrolysierte Polyvinylacetate und Ligninsulfonate.

Als Verdicker b1.2) kommen organische Verdicker sowie anorganische Verdicker in Frage. Organische Verdicker kommen als organisch natürliche bzw. biotechnologisch modifizierte oder organisch synthetische Verdicker in Frage. Typische synthetische Verdicker sind Rheostrux^{®} (Croda), Thixin- oder Thixatrol-Reihe (Elementis). Diese sind typischerweise auf Basis von Acrylaten. Typische organische Verdicker sind auf Basis von Xanthan oder Cellulose (wie etwa Hydroxyethyl- oder Carboxymethylcellulose) oder einer Kombination davon. Weitere typische Vertreter sind auf Basis von Cellulose oder Lignin. Bevorzugt werden natürliche modifizierte Verdicker auf Basis von Xanthan verwendet. Typische Vertreter sind beispielsweise Rhodopol^{®} (Solvay) und Kelzan^{®} (Kelco Corp.) sowie Satiaxane^{®} (Cargill). Anorganische Verdicker sind typischerweise auf Basis von Kieselsäuren oder Tonminerale.

Als Konservierungsmittel b1.2) kommen alle üblicherweise für diesen Zweck in Pflanzenbehandlungsmitteln vorhandenen Substanzen in Betracht, z.B. Dichlorophen, Benzylalkoholhemiformal, 5-chloro-2-methyl-4-isothiazolin-3-one [CAS-No. 26172-55-4], 2-methyl-4-isothiazolin-3-one [CAS-No. 2682-20-4] or 1.2-benzisothiazol-3(2H)-one [CAS-No. 2634-33-5]. Als Beispiele seien Acticide SPX (Thor), Proxel GXL (Lonza), Preventol D7 oder Kathon CG/ICP genannt.

Als Entschäumer b1.2) kommen alle üblicherweise für diesen Zweck in Pflanzenbehandlungsmitteln einsetzbaren Stoffe in Frage. Bevorzugt sind Silan Derivate, wie Polydimethylsiloxane, und Magnesiumstearat. Typische Produkte sind Silcolapse^{®} 484, 426 R, SRE (Solvay, Silioxane Emulsion) sowie SAG^{®} 1571 (Momentive) verwendet.

Als Kältestabilisatoren b1.2) können alle üblicherweise für diesen Zweck in Pflanzenbehandlungsmitteln einsetzbaren Stoffe fungieren. Beispielhaft genannt seien Harnstoff, Glycerin und Propylenglykol.

Als Neutralisationsmittel b1.2) kommen übliche Säuren und Basen in Betracht. Beispielhaft genannt seien Phosphorsäure, Zitronensäure, Natronlauge und wässrige Ammoniak-Lösung.

Die Zusammensetzung der erfindungsgemäßen Kapselsuspensionskonzentrate kann innerhalb eines bestimmten Bereiches variiert werden, wobei die Kapselsuspensionskonzentrate erfindungsgemäß erhältlich sind durch Reaktion der Komponenten a1.1) und a1.2) ausgehend von einer Emulsion enthaltend die Komponenten a1.1), a1.2), a2.1), a2.2), a3.1), b1.1) und b1.2), wobei
der Anteil von a1.2) zwischen 0,5 und 2,0 Gew.% liegt,
der Anteil an agrochemischem Wirkstoff a2.1) zwischen 5 und 15 Gew.%,
der Anteil an organischem Lösemittel a.2.2) zwischen 25 und 40 Gew.%,
der Anteil an Zusatzstoff a3.1) zwischen 2 und 5 Gew.%,
der Anteil an Schutzkolloiden b1.1) zwischen 0,2 und 1 Gew.%, und
der Anteil an Zusatzstoffen b1.2) zwischen 0,3 und 3 Gew. %.

Der Anteil der dispersen Phase A) in Bezug auf die gesamte Formulierung liegt im Allgemeinen zwischen 10 und 90 Gew. %, bevorzugt zwischen 30 und 70 Gew. %, besonders bevorzugt zwischen 40 und 60 Gew. -%.

Bevorzugt liegt das Verhältnis von agrochemischem Wirkstoff a2.1) zum Isocyanat oder zum Isocyanat-Gemisch a1.2) vor Reaktion der Komponenten a1.1) und a1.2) in der Emulsion zwischen 1:1 und 30:1, bevorzugt zwischen 1:1 und 15:1, besonders bevorzugt zwischen 2:1und 10:1.

Werden als Komponente a1.1) aminofunktionelle Verbindungen eingesetzt, liegt das Verhältnis von aminischen Isocyanat-reaktiven Gruppen a1.1) zur Isocyanatmischung a1.2) zwischen 0 und 1,5, bevorzugt zwischen 0 und 1, weiter bevorzugt zwischen 0 und 0,5, besonders bevorzugt zwischen 0 und 0,3. Ganz besonders bevorzugt ist 0, d.h. es werden keine amino funktionelle Verbindungen a1.1) eingesetzt, sondern Wasser dient als isocyanatreaktive Komponente.

Ferner ist das organische Lösemittel a2.2) in den zuvor genannten Ausführungsformen bevorzugt ein Mineralöl, weiter bevorzugt ein Lösemittel auf Basis von Dialkylnaphthalin (wie beispielsweise Diisopropylnaphthalin), sowie eine Mischung aus 1-Methyl-, 2-Methylnaphthalen und Naphthalen (beispielsweise Solvesso 200 ND Typen, CAS Nr.: 64742-94-5), wobei als Lösemittel eine Mischung aus 1-Methyl-, 2-Methylnaphthalen und Naphthalen ganz besonders bevorzugt ist. Prinzipiell ist es möglich die erfindungsgemäße Formulierung mit weiteren Formulierungen zu mischen um mehrere Wirkstoffe zu kombinieren. Beispielweise kann die vorliegende Erfindung mit wasserbasierten Formulierungen, wie einer SC, SL oder einer weiteren CS kombiniert werden. Pyrethroide sind synthetische Insektizide, die an die Hauptwirkstoffe des natürlichen Insektizids angelehnt sind.

Bevorzugt sind geeignete Pyrethroide ausgewählt aus der Gruppe, umfassend Acrinathrin, Allethrin, d-cis-trans-Allethrin, d-trans-Allethrin, Bifenthrin, Bioallethrin, Bioallethrin-S-cyclopentenyl-Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomer], Deltamethrin, Empenthrin [(EZ)-(1R)-Isomer], Esfenvalerat, Etofenprox, Fenpropathrin, Fenvalerat, Flucythrinat, Flumethrin, tau-Fluvalinat, Halfenprox, Imiprothrin, Kadethrin, Momfluorothrin, Permethrin, Phenothrin [(1R)-trans-Isomer], Prallethrin, Pyrethrine (pyrethrum), Resmethrin, Silafluofen, Tefluthrin, Tetramethrin, Tetramethrin [(1R)-Isomer], Tralomethrin, Transfluthrin und Methoxychlor.

Weiter bevorzugt sind Deltamethrin, beta-Cyfluthrin, Cypermethrin und lambda-Cyhalothrin und besonders bevorzugt ist Deltamethrin.

Desweiteren können die Kapselsuspensionkonzentrate in einer alternativen Ausführungsform weitere Insektizide, Akarizide und/oder Nematizide enthalten.

Verwendbare Insektizide, Akarizide und/oder Nematizide im Rahmen der vorliegenden Erfindung, hier in der Regel ihrem "Common Name" benannt, sind bekannt und beispielsweise im Pestizidhandbuch ("The Pesticide Manual" 16th Ed., British Crop Protection Council 2012) beschrieben oder im Internet recherchierbar (z. B. http://www.alanwood.net/pesticides). Die Klassifizierung basiert auf dem zum Zeitpunkt der Einreichung dieser Patentanmeldung gültigen IRAC Mode of Action Classification Scheme.
(1) Acetylcholinesterase(AChE)-Inhibitoren, vorzugsweise Carbamate ausgewählt aus Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb, oder Organophosphate ausgewählt aus Acephat, Azamethiphos, Azinphos-ethyl, Azinphos-methyl, Cadusafos, Chlorethoxyfos, Chlorfenvinphos, Chlormephos, Chlorpyrifos-methyl, Coumaphos, Cyanophos, Demeton-S-methyl, Diazinon, Dichlorvos/DDVP, Dicrotophos, Dimethoat, Dimethylvinphos, Disulfoton, EPN, Ethion, Ethoprophos, Famphur, Fenamiphos, Fenitrothion, Fenthion, Fosthiazat, Heptenophos, Imicyafos, Isofenphos, Isopropyl-O-(methoxyaminothio-phosphoryl)salicylat, Isoxathion, Malathion, Mecarbam, Methamidophos, Methidathion, Mevinphos, Monocrotophos, Naled, Omethoate, Oxydemeton-methyl, Parathion-methyl, Phenthoat, Phorat, Phosalon, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.
(2) GABA-gesteuerte Chlorid-Kanal-Blocker, vorzugsweise Cyclodien-organochlorine ausgewählt aus Chlordan und Endosulfan, oder Phenylpyrazole (Fiprole) ausgewählt aus Ethiprol und Fipronil.
(4) Kompetitive Modulatoren des nicotinischen Acetylcholin-Rezeptors (nAChR), vorzugsweise Neonicotinoide ausgewählt aus Acetamiprid, Clothianidin, Dinotefuran, Imidacloprid, Nitenpyram, Thiacloprid und Thiamethoxam, oder Nicotin, oder Sulfoximine ausgewählt aus Sulfoxaflor, oder Butenolide ausgewählt aus Flupyradifurone, oder Mesoionics ausgewählt aus Triflumezopyrim.
(5) Allosterische Modulatoren des nicotinischen Acetylcholin-Rezeptors (nAChR), vorzugsweise Spinosyne ausgewählt aus Spinetoram und Spinosad.
(6) Allosterische Modulatoren des Glutamat-abhängigen Chloridkanals (GluCl), vorzugsweise Avermectine/Milbemycine ausgewählt aus Abamectin, Emamectin-benzoat, Lepimectin und Milbemectin.
(7) Juvenilhormon-Mimetika, vorzugsweise Juvenilhormon-Analoge ausgewählt aus Hydropren, Kinopren und Methopren, oder Fenoxycarb oder Pyriproxyfen.
(8) Verschiedene nicht spezifische (multi-site) Inhibitoren, vorzugsweise Alkylhalogenide ausgewählt aus Methylbromid und andere Alkylhalogenide, oder Chloropicrin oder Sulfurylfluorid oder Borax oder Brechweinstein oder Methylisocyanaterzeuger ausgewählt aus Diazomet und Metam.
(9) TRPV-Kanal-Modulatoren chordotonaler Organe ausgewählt aus Pymetrozin und Pyrifluquinazon.
(10) Milbenwachstumsinhibitoren ausgewählt aus Clofentezin, Hexythiazox, Diflovidazin und Etoxazol.
(11) Mikrobielle Disruptoren der Insektendarmmembran ausgewählt aus Bacillus thuringiensis Subspezies israelensis, Bacillus sphaericus, Bacillus thuringiensis Subspezies aizawai, Bacillus thuringiensis Subspezies kurstaki, Bacillus thuringiensis Subspezies tenebrionis und B.t.-Pflanzenproteine ausgewählt aus Cry1Ab, Cry1Ac, Cry1Fa, Cry1A.105, Cry2Ab, VIP3A, mCry3A, Cry3Ab, Cry3Bb und Cry34Ab1/35Ab1.
(12) Inhibitoren der mitochondrialen ATP-Synthase, vorzugsweise ATP-Disruptoren ausgewählt aus Diafenthiuron, oder Organozinnverbindungen ausgewählt aus Azocyclotin, Cyhexatin und Fenbutatinoxid, oder Propargit oder Tetradifon.
(13) Entkoppler der oxidativen Phoshorylierung durch Störung des Protonengradienten ausgewählt aus Chlorfenapyr, DNOC und Sulfluramid.
(14) Blocker des nicotinischen Acetylcholinrezeptorkanals ausgewählt aus Bensultap, Cartaphydrochlorid, Thiocyclam und Thiosultap-Natrium.
(15) Inhibitoren der Chitinbiosynthese, Typ 0, ausgewählt aus Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
(16) Inhibitoren der Chitinbiosynthese, Typ 1 ausgewählt aus Buprofezin.
(17) Häutungsdisruptor (insbesondere bei Dipteren, d. h. Zweiflüglern) ausgewählt aus Cyromazin.
(18) Ecdyson-Rezeptor-Agonisten ausgewählt aus Chromafenozid, Halofenozid, Methoxyfenozid und Tebufenozid.
(19) Oktopamin-Rezeptor-Agonisten ausgewählt aus Amitraz.
(20) Mitochondriale Komplex-III-Elektronentransportinhibitoren ausgewählt aus Hydramethylnon, Acequinocyl und Fluacrypyrim.
(21) Mitochondriale Komplex-I-Elektronentransportinhibitoren, vorzugsweise METI-Akarizide ausgewählt aus Fenazaquin, Fenpyroximat, Pyrimidifen, Pyridaben, Tebufenpyrad und Tolfenpyrad, oder Rotenon (Derris).
(22) Blocker des spannungsabhängigen Natriumkanals ausgewählt aus Indoxacarb und Metaflumizone.
(23) Inhibitoren der Acetyl-CoA-Carboxylase, vorzugsweise Tetron- und Tetramsäurederivate ausgewählt aus Spirodiclofen, Spiromesifen und Spirotetramat.
(24) Inhibitoren des mitochondrialen Komplex-IV-Elektronentransports, vorzugsweise Phosphine ausgewählt aus Aluminiumphosphid, Calciumphosphid, Phosphin und Zinkphosphid, oder Cyanide ausgewählt aus Calciumcyanid, Kaliumcyanid und Natriumcyanid.
(25) Inhibitoren des mitochondrialen Komplex-II-Elektronentransports, vorzugsweise beta-Ketonitrilderivate ausgewählt aus Cyenopyrafen und Cyflumetofen, oder Carboxanilide ausgewählt aus Pyflubumid.
(28) Ryanodinrezeptor-Modulatoren, vorzugsweise Diamide ausgewählt aus Chlorantraniliprol, Cyantraniliprol und Flubendiamid.
(29) Modulatoren chordotonaler Organe (mit undefinierter Zielstruktur) ausgewählt aus Flonicamid.
(30) weitere Wirkstoffe ausgewählt aus Acynonapyr, Afidopyropen, Afoxolaner, Azadirachtin, Benclothiaz, Benzoximat, Benzpyrimoxan, Bifenazat, Broflanilid, Bromopropylat, Chinomethionat, Chloroprallethrin, Cryolit, Cyclaniliprol, Cycloxaprid, Cyhalodiamid, Dicloromezotiaz, Dicofol, Dimpropyridaz, epsilon-Metofluthrin, epsilon-Momfluthrin, Flometoquin, Fluazaindolizin, Fluensulfon, Flufenerim, Flufenoxystrobin, Flufiprol, Fluhexafon, Fluopyram, Flupyrimin, Fluralaner, Fluxametamid, Fufenozid, Guadipyr, Heptafluthrin, Imidaclothiz, Iprodione, Isocycloseram, kappa-Bifenthrin, kappa-Tefluthrin, Lotilaner, Meperfluthrin, Oxazosulfyl, Paichongding, Pyridalyl, Pyrifluquinazon, Pyriminostrobin, Spirobudiclofen, Spiropidion, Tetramethylfluthrin, Tetraniliprol, Tetrachlorantraniliprol, Tigolaner, Tioxazafen, Thiofluoximat und Iodmethan; des Weiteren Präparate auf Basis von Bacillus firmus (I-1582, BioNeem, Votivo), sowie folgende Verbindungen: 1-{2-Fluor-4-methyl-5-[(2,2,2-trifluorethyl)sulfinyl]phenyl}-3-(trifluormethyl)-1H-1,2,4-triazol-5-amin (bekannt aus WO2006/043635) (CAS 885026-50-6), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (bekannt aus WO2003/106457) (CAS 637360-23-7), 2-Chlor-N-[2-{1-[(2E)-3-(4-chlorphenyl)prop-2-en-1-yl]piperidin-4-yl}-4-(trifluormethyl)phenyl]isonicotinamid (bekannt aus WO2006/003494) (CAS 872999-66-1), 3-(4-Chlor-2,6-dimethylphenyl)-4-hydroxy-8-methoxy-1,8-diazaspiro[4.5]dec-3-en-2-on (bekannt aus WO 2010052161) (CAS 1225292-17-0), 3-(4-Chlor-2, 6-dimethylphenyl)-8-methoxy-2-oxo-1,8-diazaspiro[4.5]dec-3-en-4-yl-ethylcarbonat (bekannt aus EP 2647626) (CAS-1440516-42-6), 4-(But-2-in-1-yloxy)-6-(3,5-dimethylpiperidin-1-yl)-5-fluorpyrimidin (bekannt aus WO2004/099160) (CAS 792914-58-0), PF1364 (bekannt aus JP2010/018586) (CAS-Reg.No. 1204776-60-2), (3E)-3-[1-[(6-Chlor-3-pyridyl)methyl]-2-pyridyliden]-1,1,1-trifluorpropan-2-on (bekannt aus WO2013/144213) (CAS 1461743-15-6), N-[3-(Benzylcarbamoyl)-4-chlorphenyl]-1-methyl-3-(pentafluorethyl)-4-(trifluormethyl)-1H-pyrazol-5-carboxamid (bekannt aus WO2010/051926) (CAS 1226889-14-0), 5-Brom-4-chlor-N-[4-chlor-2-methyl-6-(methylcarbamoyl)phenyl]-2-(3-chlor-2-pyridyl)pyrazol-3-carboxamid (bekannt aus CN103232431) (CAS 1449220-44-3), 4-[5-(3,5-Dichlorphenyl)-4,5-dihydro-5-(trifluormethyl)-3-isoxazolyl]-2-methyl-N-(cis-1-oxido-3-thietanyl)benzamid, 4-[5-(3,5-Dichlorphenyl)-4,5-dihydro-5-(trifluormethyl)-3-isoxazolyl]-2-methyl-N-(trans-1-oxido-3-thietanyl)benzamid und 4-[(5 S)-5-(3,5-Dichlorphenyl)-4,5-dihydro-5-(trifluormethyl)-3-isoxazolyl]-2-methyl-N-(cis-1-oxido-3-thietanyl)benzamid (bekannt aus WO 2013/050317 A1) (CAS 1332628-83-7), N-[3-Chlor-1-(3-pyridinyl)-1H-pyrazol-4-yl]-N-ethyl-3-[(3,3,3-trifluorpropyl)sulfinyl]propanamid, (+)-N-[3-Chlor-1-(3-pyridinyl)-1H-pyrazol-4-yl]-N-ethyl-3-[(3,3,3-trifluorpropyl)sulfinyl]propanamid und (-)-N-[3-Chlor-1-(3-pyridinyl)-1H-pyrazol-4-yl]-N-ethyl-3-[(3,3,3-trifluorpropyl)sulfinyl]propanamid (bekannt aus WO 2013/162715 A2, WO 2013/162716 A2, US 2014/0213448 A1) (CAS 1477923-37-7), 5-[[(2E)-3-Chlor-2-propen-1-yl]amino]-1-[2,6-dichlor-4-(trifluormethyl)phenyl]-4-[(trifluormethyl)sulfinyl]-1H-pyrazol-3-carbonitrile (bekannt aus CN 101337937 A) (CAS 1105672-77-2), 3-Brom-N-[4-chlor-2-methyl-6-[(methylamino)thioxomethyl]phenyl]-1-(3-chlor-2-pyridinyl)-1H-pyrazol-5-carboxamid, (Liudaibenjiaxuanan, bekannt aus CN 103109816 A) (CAS 1232543-85-9); N-[4-Chlor-2-[[(1,1-dimethylethyl)amino]carbonyl]-6-methylphenyl]-1-(3-chlor-2-pyridinyl)-3-(fluormethoxy)-1H-pyrazol-5-carboxamid (bekannt aus WO 2012/034403 A1) (CAS 1268277-22-0), N-[2-(5-Amino-1,3,4-thiadiazol-2-yl)-4-chlor-6-methylphenyl]-3-brom-1-(3-chlor-2-pyridinyl)-1H-pyrazol-5-carboxamid (bekannt aus WO 2011/085575 A1) (CAS 1233882-22-8), 4-[3-[2,6-Dichlor-4-[(3,3-dichlor-2-propen-1-yl)oxy]phenoxy]propoxy]-2-methoxy-6-(trifluormethyl)pyrimidin (bekannt aus CN 101337940 A) (CAS 1108184-52-6); (2E)- und 2(Z)-2-[2-(4-Cyanophenyl)-1-[3-(trifluormethyl)phenyl]ethyliden]-N-[4-(difluormethoxy)phenyl]hydrazincarboxamid (bekannt aus CN 101715774 A) (CAS 1232543-85-9); Cyclopropancarbonsäure-3-(2,2-dichlorethenyl)-2,2-dimethyl-4-(1H-benzimidazol-2-yl)phenylester (bekannt aus CN 103524422 A) (CAS 1542271-46-4); (4aS)-7-Chlor-2,5-dihydro-2-[[(methoxycarbonyl)[4-[(trifluormethyl)thio]phenyl]amino]carbonyl]indeno[1,2-e][1,3,4]oxadiazin-4a(3H)-carbonsäuremethylester (bekannt aus CN 102391261 A) (CAS 1370358-69-2); 6-Desoxy-3-O-ethyl-2,4-di-O-methyl-1-[N-[4-[1-[4-(1,1,2,2,2-pentafluorethoxy)phenyl]-1H-1,2,4-triazol-3-yl]phenyl]carbamat]-α-L-mannopyranose (bekannt aus US 2014/0275503 A1) (CAS 1181213-14-8); 8-(2-Cyclopropylmethoxy-4-trifluormethylphenoxy)-3-(6-trifluormethylpyridazin-3-yl)-3-azabicyclo[3.2.1]octan (CAS 1253850-56-4), (8-anti)-8-(2-Cyclopropylmethoxy-4-trifluormethylphenoxy)-3-(6-trifluormethylpyridazin-3-yl)-3-azabicyclo[3.2.1]octan (CAS 933798-27-7), (8-syn)-8-(2-Cyclopropylmethoxy-4-trifluormethylphenoxy)-3-(6-trifluormethylpyridazin-3-yl)-3-azabicyclo[3.2.1]octan (bekannt aus WO 2007040280 A1, WO 2007040282 A1) (CAS 934001-66-8), N-[3-Chlor-1-(3-pyridinyl)-1H-pyrazol-4-yl]-N-ethyl-3-[(3,3,3-trifluorpropyl)thio]-propanamid (bekannt aus WO 2015/058021 A1, WO 2015/058028 A1) (CAS 1477919-27-9) und N-[4-(Aminothioxomethyl)-2-methyl-6-[(methylamino)carbonyl]phenyl]-3-bromo-1-(3-chloro-2-pyridinyl)- 1H-pyrazol-5-carboxamid (bekannt aus CN 103265527 A) (CAS 1452877-50-7), 5-(1,3-Dioxan-2-yl)-4-[[4-(trifluormethyl)phenyl]methoxy]-pyrimidin (bekannt aus WO 2013/115391 A1) (CAS 1449021-97-9), 3-(4-Chlor-2,6-dimethylphenyl)-8-methoxy-1-methyl-1,8-diazaspiro[4.5]decane-2,4-dion (bekannt aus WO 2014/187846 A1) (CAS 1638765-58-8), 3-(4-Chlor-2,6-dimethylphenyl)-8-methoxy-1-methyl-2-oxo-1,8-diazaspiro[4.5]dec-3-en-4-yl-carbonsäureethylester (bekannt aus WO 2010/066780 A1, WO 2011151146 A1) (CAS 1229023-00-0), 4-[(5S)-5-(3,5-Dichlor-4-fluorophenyl)-4,5-dihydro-5-(trifluoromethyl)-3-isoxazolyl]-N-[(4R)-2-ethyl-3-oxo-4-isoxazolidinyl]-2-methyl-benzamid (bekannt aus WO 2011/067272, WO2013/050302) (CAS 1309959-62-3).

### Pflanzenschutz - Behandlungsarten

Die Behandlung der Pflanzen und Pflanzenteile mit den Kapselsuspensionskonzentraten gemäß der vorliegenden Erfindung erfolgt direkt oder durch Einwirkung auf deren Umgebung, Lebensraum oder Lagerraum nach den üblichen Behandlungsmethoden, z. B. durch Tauchen, Spritzen, Sprühen, Berieseln, Verdampfen, Zerstäuben, Vernebeln, Verstreuen, Verschäumen, Bestreichen, Verstreichen, Injizieren, Gießen (drenchen), Tröpfchenbewässerung und bei Vermehrungsmaterial, insbesondere bei Saatgut, weiterhin durch Trockenbeizen, Nassbeizen, Schlämmbeizen, Inkrustieren, ein- oder mehrschichtiges Umhüllen, usw. Es ist ferner möglich, die Kapselsuspensionskonzentrate gemäß der vorliegenden Erfindung nach dem Ultra-Low-Volume-Verfahren auszubringen oder die Anwendungsform oder die Kapselsuspensionskonzentrate gemäß der vorliegenden Erfindung selbst in den Boden zu injizieren.

Eine bevorzugte direkte Behandlung der Pflanzen ist die Blattapplikation, d. h. die Kapselsuspensionskonzentrate gemäß der vorliegenden Erfindung werden auf das Blattwerk aufgebracht, wobei die Behandlungsfrequenz und die Aufwandmenge auf den Befallsdruck des jeweiligen Schädlings abgestimmt sein sollte.

Bei systemisch wirksamen Wirkstoffen gelangen die Kapselsuspensionskonzentrate gemäß der vorliegenden Erfindung auch über das Wurzelwerk in die Pflanzen. Die Behandlung der Pflanzen erfolgt dann durch Einwirkung der Kapselsuspensionskonzentrate gemäß der vorliegenden Erfindung auf den Lebensraum der Pflanze. Das kann beispielsweise durch Drenchen, Einmischen in den Boden oder die Nährlösung sein, d. h. der Standort der Pflanze (z. B. Boden oder hydroponische Systeme) wird mit den Kapselsuspensionskonzentraten gemäß der vorliegenden Erfindung getränkt, oder durch Tropfapplikation ("drip", oftmals auch als "Chemigation" bezeichnet) in den Standort der Pflanzen eingebracht, d.h. die erfindungsgemäßen Kapselsuspensionskonzentrate werden mittels Oberflächen- oder Untergrund-Tropfrohren über bestimmte Zeiträume zusammen mit variierenden Mengen an Wasser an definierten Stellen in der Nähe der Pflanzen eingebracht.

Die Bodenapplikation der erfindungsgemäßen Kapselsuspensionskonzentrate gemäß der vorliegenden Erfindung ist die bevorzugte Anwendungsform.

In einer alternativen Ausführungsform werden die erfindungsgemäßen Kapselsuspensionskonzentrate in einer Blattanwendung ausgebracht.

Die erfindungsgemäßen Kapselsuspensionskonzentrate eignen sich hervorragend zur Applikation der enthaltenen agrochemischen Wirkstoffe auf Pflanzen und/oder deren Lebensraum. Sie gewährleisten die Freisetzung der aktiven Komponenten in der jeweils gewünschten Menge über einen längeren Zeitraum. Die erfindungsgemäßen Kapselsuspensionskonzentrate können entweder als solche oder nach vorherigem Verdünnen mit Wasser in der Praxis eingesetzt werden.

Die Anwendung erfolgt dabei nach üblichen Methoden, also z.B. durch Gießen, Verspritzen oder Versprühen.

Die Aufwandmenge an erfindungsgemäßen Kapselsuspensionskonzentraten kann innerhalb eines größeren Bereiches variiert werden. Sie richtet sich nach den jeweiligen agrochemischen Wirkstoffen und nach deren Gehalt in den Mikrokapsel-Formulierungen.

Die erfindungsgemäßen Kapselsuspensionskonzentrate können nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Anwendung gebracht werden.

Die Erfindung wird durch die folgenden Beispiele veranschaulicht.

### Beispiele

### 1. Herstellung der CS-Formulierung

Herstellung der organischen Phase: Der Wirkstoff wurde unter Rühren im organischen Lösemittel, gegebenenfalls mit weiteren Zusatzstoffen versetzt, gelöst. Anschließend wurde das Polyisocyanate im festgelegten Verhältnis zugegeben.

Herstellung der wässrigen Phase: Das Schutzkolloid wurde in Wasser gelöst, anschließend wurde das Antischaummittel zugegeben.

Die organische Phase wurde zur wässrigen Phase gegeben und mit Hilfe eines Rotor-Stator Mischwerkzeuges (UltraTurrax) emulgiert bis die gewünschte Partikelgröße erreicht war. Gegebenenfalls wurde zusätzlich die Aminkomponente zur Emulsion gegeben. Die Mischung wurde für ca. 4 h auf ca. 70 °C aufgeheizt um eine komplette Reaktion des wandbildenden Polyharnstoffes zu gewährleisten.

Anschließend wurde die Mischung auf Raumtemperatur abgekühlt und mit Bioziden und Verdicker versetzt, um die gewünschte Viskosität einzustellen. Gegebenenfalls wurde Ammoniak zugegeben, um die komplette Abreaktion des Isocyanats zu gewährleisten.

Die Partikelgröße der finalen Kapseln wurde mittels Laserbeugung (Malvern Mastersizer) bestimmt.

| # | ***1*** | ***2*** | ***3*** | ***4*** | ***8*** | ***9*** | ***10*** | ***11*^{a*)*}** | ***12*** | ***14*** | ***17^{a)}*** | ***18^{a)}*** | ***19^{a)}*** | ***20*** | ***21*** | ***22*** | ***23*** |
|---|---|---|---|---|---|---|---|---|---|---|---|---|---|---|---|---|---|
| Conc. | CS075 | CS050 | CS075 | CS100 | CS075 | CS075 | CS075 | CS075 | CS075 | CS075 | CS075 | CS075 | CS075 | CS0 75 | CS075 | CS075 | CS075 |
| Deltamethrin | 7.4 | 4.9 | 7.4 | 9.8 | 7.4 | 7.4 | 7.4 | 7.4 | 7.4 | 7.4 | 7.4 | 7.4 | 7.4 | 7.4 | 7.4 | 7.4 | 7.4 |
| Break-Thru Vibrant | 3 | 3.1 | 3 | 3.1 | 3 | 3 | 3 | 3 | 3 | 3 | | 1 | | 2 | 5 | | |
| Breakthru S240 | | | | | | | | | | | | | 3 | | | | |
| Synergen W 06 | | | | | | | | | | | | | | | | 3 | |
| Genapol EP 2584 | | | | | | | | | | | | | | | | | 3 |
| Desmodur 44V 20 L | 0.79 | 0.91 | 0.88 | 0.91 | 0.88 | 0.79 | 2.03 | 3.85 | 0.71 | 0.79 | 0.88 | 0.88 | 0.88 | 0.88 | 0.88 | 0.88 | 0.88 |
| DETA | 0.098 | | | | | 0.098 | 0.25 | 0.95 | 0.18 | 0.1 | | | | | | | |
| Silcolapse 426 R | | 0.02 | 0.02 | 0.02 | 0.03 | 0.01 | 0.01 | 0.028 | 0.01 | 0.02 | 0.029 | 0.02 | 0.02 | 0.02 | 0.02 | 0.02 | 0.02 |
| Silfoam SRE | 0.03 | | | | | | | | | | | | | | | | |
| Xanthan Gum | 0.16 | 0.2 | 0.2 | 0.16 | 0.46 | 0.2 | 0.2 | 0.2 | 0.2 | 0.2 | 0.2 | 0.2 | 0.2 | 0.2 | 0.2 | 0.2 | 0.2 |
| Proxel GXL + Kathon CG/ICP | 0.23 | 0.19 | 0.19 | 0.19 | 0.19 | 0.19 | 0.19 | 0.19 | 0.19 | 0.19 | 0.19 | 0.19 | 0.19 | 0.19 | 0.19 | 0.19 | 0.19 |
| Kuraray Poval 26-88 | 0.49 | | | | 0.46 | 0.45 | 0.45 | 0.41 | 0.45 | | 0.45 | | | | | | |
| Borresperse NA | | 0.44 | 0.46 | 0.46 | | | | | | 0.46 | 0.5 | 0.46 | 0.46 | 0.46 | 0.46 | 0.46 | 0.46 |
| Ammoniak 24-30% | 0.008 | | | | | | | | | | | | | | | | |
| Water | 56.7 | 53.7 | 55 | 53.7 | 55 | 54.8 | 53.6 | 51.1 | 55 | 55 | 54.5 | 55 | 55 | 55 | 55 | 55 | 55 |
| Solvesso 200 ND | 30.9 | 36.6 | 32.9 | 31.7 | 32.9 | 32.9 | 32.9 | 32.9 | 32.9 | 32.9 | 35.9 | 34.9 | 32.9 | 33.9 | 30.9 | 32.9 | 32.9 |
| Particle size d₅₀/d₉₀ [µm] | | 4.1/ 12.6 | a*:4.8/ 13.7 | 5.0/ 20.6 | a*: 3.1/ 6.3 | 3.1/6.4 | 2.1/6.7 | 5.1/ 10.6 | 2.4/5.3 | 4.7/ 12.9 | 15.4/ 27.5 | 6.8/ 33.7 | 3.4/ 17.8 | 5.3/ 22.1 | 6.4/ 35.7 | 2.6/ 7.3 | 4/ 20.7 |
| | | | b: 13.4/ 25.7 | | b: 4.5/ 8.9 | | | | | | | | | | | | |
| Greenhouse tests | x | x | x | x | x | x | | x | x | x | x | x | x | x | x | x | x |
| Field tests | | | x | | x | x | x | x | | | | | | | | | |

| | | | | | | | | | | | | | | | | | |
|---|---|---|---|---|---|---|---|---|---|---|---|---|---|---|---|---|---|
| *: a/b bedeutet, dass mit der gleichen Rezeptur absichtlich zwei Proben mit unterschiedlicher Partikelgröße hergestellt wurden. ^{a)}: nicht erfindungsgemäß | | | | | | | | | | | | | | | | | |

| # | ***5*** | ***6*** | ***7*** | ***13*** | ***15*** | *1**6*** | ***24*** | **2*5^{a)}*** | ***26*** | **27^{a)}** | ***28^{a)}*** | ***29*** | ***30*** | ***31^{a)}*** | **32** |
|---|---|---|---|---|---|---|---|---|---|---|---|---|---|---|---|
| Conc. | CS 075 | CS 075 | CS 075 | CS 075 | CS075 | CS075 | CS075 | CS075 | CS075 | CS 075 | CS 075 | CS 075 | CS 075 | CS 075 | CS 075 |
| Deltamethrin | | | | 7.4 | 7.4 | 7.4 | 7.4 | 7.4 | 7.4 | 7.4 | 7.4 | 7.4 | 7.4 | 7.4 | 7.4 |
| Beta-Cyfluthrin | | | 7.4 | | | | | | | | | | | | |
| Cypermethrin | | 7.4 | | | | | | | | | | | | | |
| Lambda-Cyhalothrin | 7.4 | | | | | | | | | | | | | | |
| Break-Thru Vibrant | 3 | 3 | 3 | 3 | 3 | 3 | | | | | 1 | 2 | 3 | 0.5 | 3 |
| Genapol X 060 | | | | | | | 2 | | | | | | | | |
| Genapol XM 060 | | | | | | | | 2 | | | | | | | |
| Genapol EP 2584 | | | | | | | | | 2 | | | | | | |
| Desmodur 44V 20 L | 0.88 | 0.88 | 0.88 | | | | 0.88 | 0.88 | 0.88 | 0.79 | 0.88 | 0.88 | 0.88 | 0.88 | 2.03 |
| Desmodur T 80 | | | | 0.88 | | | | | | | | | | | |
| Desmodur N 3800 | | | | | 0.85 | 0.81 | | | | | | | | | |
| DETA | | | | | 0.04 | 0.07 | | | | 0.1 | | | | | 0.25 |
| Silcolapse 426 R | 0.02 | 0.02 | 0.02 | 0.03 | 0.02 | 0.02 | 0.02 | 0.02 | 0.02 | 0.02 | 0.02 | 0.02 | 0.02 | 0.02 | 0.02 |
| Xanthan Gum | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Proxel GXL + Kathon CG/ICP | 0.19 | 0.19 | 0.19 | 0.19 | 0.19 | 0.19 | 0.19 | 0.19 | 0.19 | 0.19 | 0.19 | 0.19 | 0.19 | 0.19 | 0.19 |
| Kuraray Poval 26-88 | | | | 0.46 | | | | | | 0.45 | 0.46 | 0.46 | 0.46 | | |
| Borresperse NA | 0.46 | 0.46 | 0.46 | | 0.48 | 0.48 | 0.46 | 0.46 | 0.46 | | | | | 0.45 | 0.44 |
| Water | 55 | 55 | 55 | 55 | 55 | 55 | 55 | 55 | 55 | 55 | 55 | 55 | 55 | 55 | 53.6 |
| Solvesso 200 ND | 32.9 | 32.9 | 32.9 | 32.9 | 32.9 | 32.9 | 33.9 | 33.9 | 33.9 | 35.9 | 34.9 | 33.9 | 32.9 | 35.4 | 32.9 |
| Particle size d₅₀/d₉₀ [µm] | 8.3/24.3 | 7.9/22.3 | 6.1/17.8 | 2.9/6.1 | 4.6/8.9 | 3.5/8.7 | 3.3/9.8 | 8.3/22.5 | 6.1/16.3 | 10.5/18.9 | 4.9/10 | 4.6/8.9 | 3.6/7.3- | 8.5/29 | 5.4/9.6 |
| Greenhouse tests | x | x | x | x | x | x | x | x | x | | | | | | x |
| Field tests | | | | | | | | | | | | | | | |

| | | | | | | | | | | | | | | | |
|---|---|---|---|---|---|---|---|---|---|---|---|---|---|---|---|
| ^{a)}: **nicht** erfindungsgemäß | | | | | | | | | | | | | | | |

### 2. Testung verschiedener Formuliertypen im Gewächshaus

### Methodenbeschreibung:

Wirksamkeitstests wurden in länglichen Plastikbehältern durchgeführt, die mit 5,9 kg sandigem Lehmboden, pH 7,1, 1,8% Humus gefüllt waren. Eine fünf cm tiefe Furche wurde gebildet und vier Maissamen (Sorte Ronaldino) in einem Abstand von sieben cm hineingegeben. Die Testformulierungen wurden in 4 ml Leitungswasser verdünnt und gleichmäßig mit 700 g sandigem Lehmboden gemischt. Der behandelte Boden wurde verwendet, um die offene Furche aufzufüllen und die Samen zu bedecken, was zu einem Gesamtbodengewicht von 6,6 kg pro Behälter führte. Der Befall mit 450 Diabrotica balteata Eier pro Behälter wurde einen Tag nach der Aussaat durch Pipettieren durchgeführt. Die Bodenfeuchtigkeit wurde auf 50% der spezifischen Feldkapazität eingestellt und nach dem Auftreten der ersten geschlüpften Diabrotica balteata-Larven auf 80% erhöht. Die Wachstumsbedingungen waren bei einer konstanten Temperatur von 25 ° C, 60-70% relativer Luftfeuchtigkeit und 14 h Beleuchtung mit Natriumdampflampen. Der Versuchsaufbau umfasste drei Wiederholungen pro Behandlung. Die Bewertung wurde 21 Tage nach dem Befall durchgeführt, indem die Anzahl der beschädigten Pflanzen gezählt und die frischen Sprossgewichte pro Behälter gemessen wurden.

Da die absoluten Zahlen von Testreihe zu Testreihe stark variieren können, sind innerhalb einer Tabelle immer nur Ergebnisse angegeben, welche auch in einem parallelen Test durchgeführt wurden. Gegebenenfalls sind als zwei oder mehr Tabellen mit den jeweilige Referenzergebnissen angegeben.

Vergleich verschiedener Formuliertypen:

| # | ***1*** | N1 | N2 | N3 | N4 |
|---|---|---|---|---|---|
| Bezeichnung | | K-Othrine SC025 (Handelsprodukt) | Decis Forte EC100 (Handelsprodukt) | GR0.4 | GR0.4 |
| Deltamethrin | | | | 0.4 | 0.4 |
| Propylene glycol | | | | 0.27 | |
| Biodac 30/60 | | | | 99.2 | 96 |
| Zitronensäure | | | | 0.003 | |
| Lucramul PS 29 | | | | 0.13 | |
| Lucramul Hot 5902 | | | | | 0.12 |
| Ruetasolv Di | | | | | 3.48 |
| Antifoam | | | | 0.003 | |

| # | Gesunde Pflanzen / % |
|---|---|
| ***1*** | 83.3 |
| N1 | 25.0 |
| N2 | 44.4 |
| N3 | 0.0 |
| N4 | 0.0 |
| UTC nicht befallen | 100 |
| UTC befallen | 0.0 |

Die erfindungsgemäße Formulierung #1 zeigt deutlich bessere Wirksamkeit als alle Vergleichsbeispiele.

### 3. Vergleich verschiedener CS-Rezepturen (Wenn nicht anderes angegeben galten folgende Versuchsbedingungen Anwendungskonzentration DLT immer 60 g/ha, Beobachtungszeitraum 21 Tage nach Befall)

### a. Konzentration AI

| # | Gesunde Pflanzen / % | Sprossgewicht / g |
|---|---|---|
| ***2*** | 100 | 89.7 |
| ***3*** | 100 | 91 |
| ***4*** | 100 | 84.7 |
| UTC nicht befallen | 100 | 79.7 |
| UTC befallen | 0 | 29.3 |

Die Konzentration an AI in der Formulierung kann bei gleicher Aufwandmenge an Wirkstoff mit gleich guter Wirksamkeit variiert werden.

### b. Verschiedene Wirkstoffe

Vergleich der erfindungsgemäßen Formulierung vs. Marktprodukte (Kapselsuspension oder Granulate) von Lambda-Cyhalothrin, Beta-Cyfluthrin, Cypermethrin

| # | Sprossgewicht / g | | | |
|---|---|---|---|---|
| | 5 g ai/ha | 10 g ai/ha | 30 g ai/ha | 60 g ai/ha |
| ***5*** | 10.2 | 13.6 | 15.0 | 12.7 |
| Lamda Cyhalothrin CS100 (Karate Zeon) | 7.0 | 4.4 | 6.5 | 9.6 |
| Lambda Cyhalothrin GR0.4 | 8.2 | 10.0 | 11.7 | 14.9 |
| ***6*** | | 9.7 | 14.2 | 14.2 |
| Beta Cyfluthrin GR0.4 | | 7.2 | 7.5 | 11.3 |
| ***7*** | | 7.9 | 14.7 | 15.4 |
| Cypermethrin MG0.8 (Belem) | | 6.3 | 7.0 | 6.8 |
| UTC nicht befallen | 9.9 | | | |
| UTC befallen | 1.7 | | | |

Alle erfindungsgemäßen Formulierungen zeigen mindestens vergleichbare, meist deutlich bessere Effektivität bei gleicher AI-Aufwandmenge als die Marktprodukte des gleichen Wirkstoffes

### c. Zusammensetzung Kapselhülle

Im Folgenden werden erfindungsgemäße Formulierungen mit verschiedenen Kapseldicken, Isocyanattypen, Quervernetzung und Schutzkolloiden getestet.

| # | Gesunde Pflanzen / % | Sprossgewicht / g |
|---|---|---|
| ***8*** | 33.3 | 38.8 |
| UTC nicht befallen | 100 | 36.4 |
| UTC befallen | 0 | 13.6 |

| # | Gesunde Pflanzen / % | Sprossgewicht / g |
|---|---|---|
| ***3*** | 66.7 | 41.2 |
| ***9*** | 16.7 | 42.2 |
| ***10*** | 1.0 | 28.0 |
| ***11^{a)}*** | 1.0 | 14.86 |
| ***12*** | 0.0 | 31.6 |
| ***13*** | 25.0 | 39.2 |
| UTC nicht befallen | 100 | 34 |
| UTC befallen | 0 | 21.6 |

| | | |
|---|---|---|
| ^{a)}: **nicht** erfindungsgemäß | | |

| # | Gesunde Pflanzen / % | Sprossgewicht / g |
|---|---|---|
| ***9*** | 83.3 | 72.8 |
| ***3*** | 83.3 | 71.8 |
| ***14*** | 66.7 | 67.0 |
| UTC nicht befallen | 100 | 72.2 |
| UTC befallen | 8 | 26.2 |

| # | Gesunde Pflanzen / % | Sprossgewicht / g |
|---|---|---|
| ***3*** | 100 | 26.4 |
| ***15*** | 100 | 37 |
| ***16*** | 100 | 39.3 |
| UTC nicht befallen | 100 | 27.4 |
| UTC befallen | 8 | 15.7 |

Alle erfindungsgemäßen Formulierungen zeigen Wirksamkeit. Die Wirksamkeit nach 21 Tagen ist stark abhängig von der Beschaffenheit der Hülle der Kapsel. Durch geeignete Wahl der Hüllzusammensetzung oder Mischung verschiedener Formulierungen lässt sich folglich das geforderte Freisetzungsprofil einstellen.

### d. Typ und Menge Adjuvants

| # | Gesunde Pflanzen / % | Sprossgewicht / g |
|---|---|---|
| ***17^{a)}*** | 66.7 | 63.3 |
| ***18^{a)}*** | 91.7 | 81.7 |
| ***1*** | 100 | 91.0 |
| ***19^{a)}*** | 100 | 88.7 |
| UTC nicht befallen | 100 | 79.7 |
| UTC befallen | 0 | 29.3 |

| | | |
|---|---|---|
| ^{a)}: nicht erfindungsgemäß | | |

| # | Gesunde Pflanzen / % | Sprossgewicht / g |
|---|---|---|
| ***20*** | 100 | 28.7 |
| ***21*** | 100 | 36.3 |
| ***22*** | 100 | 38.0 |
| ***23*** | 100 | 36.7 |
| ***10*** + BT V Tank mix***^{a)}*** | 16.7 | 21.3 |
| UTC nicht befallen | 100 | 40.7 |
| UTC befallen | 8.3 | 17.0 |

| | | |
|---|---|---|
| ^{a)}: nicht erfindungsgemäß | | |

| # | Gesunde Pflanzen / % | Sprossgewicht / g |
|---|---|---|
| ***20*** | 100 | 30.6 |
| ***24*** | 100 | 41.1 |
| ***25^{a)}*** | 25 | 36.7 |
| ***26*** | 100 | 45.2 |
| UTC nicht befallen | 100 | 27.4 |
| UTC befallen | 8 | 15.7 |

| | | |
|---|---|---|
| ^{a)}: nicht erfindungsgemäß | | |

Überraschenderweise hat sich herausgestellt, dass das Adjuvants für eine optimale Wirkung in der Kapsel enthalten sein muß, während Tank-Mix Additive keine hinreichende Wirkung zeigen. Darüber hinaus zeigen Adjuvantien mit endständiger Hydroxyl-Funktionalität noch besser Wirksamkeit als solche mit Methoxy-Funktionalität.

Optische Bewertung der Kapselsuspensionen unter dem Mikroskop nach Eintrocknen der Formulierung:

| Schutzkolloid | 0% BreakThru Vibrant*^{a)}* | 0.5 % BT V | 1 % BT V | 2 % BT V | 3% BT V |
|---|---|---|---|---|---|
| Kuraray Poval 26-88 | **#*27^{a)}*:** - | | #***28^{a})*:** - | **#*29*: o** | *#****30*:** *+* |
| Borresperse NA | | *#**31^{a)}**: -* | #***18^{a)}*** - | #***20*: o** | **#3:** + |

| | | | | | |
|---|---|---|---|---|---|
| Bewertungsschema: - = schlecht, o = Grenzbereich, + = gut; ^{a)}: nicht erfindungsgemäß | | | | | |

### e. Einfluss Bodenbedingungen

### 1. Standardboden, 2. Standardboden + 20% Torf;

| # | Gesunde Pflanzen / % | | Sprossgewicht / g | |
|---|---|---|---|---|
| | 1.Standardboden | 2.+20% Torf | 1.Standardboden | 2.+20% Torf |
| ***3*** | 100 | 91.7 | 36.3 | 30.7 |
| ***8*** | 100 | 100 | 35.3 | 39.0 |
| UTC nicht befallen | 100 | 100 | 40.7 | 42.7 |
| UTC befallen | 8.3 | 16.7 | 17.0 | 17.7 |

Überraschenderweise wurde gefunden, dass die Wirksamkeit unabhängig von der Bodenzusammensetzung ist.

### Bodenfeuchte

Anwendungsszenarien:
A) Erfindungsgemäße Formulierung wird in oberste Bodenschicht eingebracht (ca. 40-50 % Wasserhaltevermögen) = Standard
B) Erfindungsgemäße Formulierung wird in oberste Bodenschicht eingebracht (ca. 40-50 % Wasserhaltevermögen) und für 7 Tage unter feuchten Bedingungen gelagert
C) Erfindungsgemäße Formulierung wird in oberste Bodenschicht eingebracht (ca. 40-50 % Wasserhaltevermögen) und der behandelte Boden wurde für 7 Tage getrocknet (< 20 % Wasseraufnahmevermögen)
D) Boden wurde für 7 Tage getrocknet (< 20 % Wasseraufnahmevermögen), die erfindungsgemäße Formulierung in den trockenen Boden appliziert und anschließend nach dem Einsähen wieder bewässert

| # | Gesunde Pflanzen / % | | | | Sprossgewicht / g | | | |
|---|---|---|---|---|---|---|---|---|
| | A) | B) | C) | D) | A) | B) | C) | D) |
| ***3*** | 91.7 | 100 | 100 | 83.3 | 24.0 | 25.3 | 21.3 | 200 |
| ***8*** | 100 | 100 | 100 | 100 | 21.3 | 21.7 | 22.3 | 19.0 |
| UTC nicht befallen | | | | | 19.0 | | | |
| UTC befallen | 0 | | | | 5.7 | | | |

Überraschenderweise wurde gefunden, dass die Wirksamkeit unabhängig von den Bodenfeuchte-Bedingungen ist.

### f. Vergleich mit kommerziellem Produkt

| # | Gesunde Pflanzen / % | Sprossgewicht / g |
|---|---|---|
| ***9*** | 83.3 | 72.8 |
| DelCaps CS050 | 4.2 | 32.5 |
| UTC nicht befallen | 100 | 72.2 |
| UTC befallen | 8 | 26.2 |

Das Handelsprodukt zeigt bei Bodenapplikation deutlich schlechtere Wirksamkeit als die erfindungsgemäße Formulierung.

### g. Einfluss Partikelgröße von verschiedenen Batchen gleicher Rezeptur

| # | Gesunde Pflanzen / % | Sprossgewicht / g |
|---|---|---|
| ***3a*** | 100 | 61.2 |
| ***3b*** | 100 | 67.1 |
| ***8a*** | 100 | 63.7 |
| ***8b*** | 100 | 67.6 |
| UTC nicht befallen | 100 | 69.7 |
| UTC befallen | 0 | 34.1 |

Kleinere Variationen der Partikelgröße haben keinen Einfluss auf die Wirksamkeit.

### 4. Feldversuche

Die erfindungsgemäßen Formulierungen wurden in Feldversuchen im Vergleich zu Belem GR (Wirkstoff: Cypermethrin) als Standard gegen Drahtwurm in Mais getestet. Die Kapselformulierungen wurden dabei in die Saatfurche gesprüht (in furrow spray application) mit einer Aufwandmenge von 60 g a.i./ha. (Vergleich Belem MG 0,8 wird mit 96 g a.i./ ha angewendet). Die angegebene Wirksamkeit ist die Mittelung aus 4 Einzelergebnissen.

| # | Wirksamkeit / % |
|---|---|
| unbehandelt | 46.9 |
| ***8*** | 73.8 |
| ***3*** | 75.7 |
| ***9*** | 70.7 |
| ***10*** | 62.0 |
| ***11*** ^{a)} | 45.9 |
| ***8*+*11*** | 65.0 |
| Belem MG 0,8 | 61.3 |

| | |
|---|---|
| ^{a)}: nicht erfindungsgemäß | |

Die erfindungsgemäßen Formulierungen zeigen bessere Wirkung im Vergleich zum Standard. Darüber hinaus lässt sich die Freisetzungsrate durch Mischung zweier Formulierungen mit unterschiedlicher Freisetzung einstellen (#8 + #11). Man erhält eine mittlere Wirksamkeit.

### 5. Blattapplikation

Die erfindungsgemäßen Formulierungen wurden im Gewächshaus an Myzus persicae (MYZUPE ) auf Kohl (Melissa) und Paprika (Feher); Aphis gossypii (APHIGO) auf Baumwolle (Viky); mit gemischten Populationen, pre-infested getestet.

Die Anwendungskonzentration betrug 400 l/ha mit einem track sprayer. Es wurden jeweils drei Wiederholungen durchgeführt. Die Versuche mit MYZUPE wurden bei 20 °C, mit APHIGO bei 23 °C durchgeführt. Die Auswertung erfolgte nach 1, 4 und 7 Tagen (1, 4, 7 d) nach Anwendung. Applikationsrate: track sprayer mit 400 l/ha, Kontakt, jeweils drei Replikate

| | Anwendungskonzentration | % Mortalität Myzus persicae auf Paprika | | | % Mortalität Myzus persicae auf Kohl | | | % Mortalität Aphis gosypii auf Baumwolle | | |
|---|---|---|---|---|---|---|---|---|---|---|
| | g a.i. /ha | 1 d | 4 d | 7 d | 1 d | 4 d | 7 d | 1 d | 4 d | 7 d |
| N1 | 4.8 | 23 | 27 | 37 | 37 | 40 | 37 | 23 | 50 | 40 |
| | 0.96 | 10 | 10 | 3 | 10 | 10 | 0 | 7 | 7 | 3 |
| | 0.19 | 0 | 0 | 0 | 0 | 0 | 0 | 0 | 0 | 0 |
| | 0.038 | 0 | 0 | 0 | 0 | 0 | 0 | 0 | 0 | 0 |
| ***32*** | 4.8 | 87 | 99 | 100 | 77 | 97 | 97 | 70 | 89 | 89 |
| | 0.96 | 60 | 73 | 83 | 63 | 67 | 40 | 47 | 83 | 83 |
| | 0.19 | 20 | 20 | 23 | 20 | 13 | 3 | 13 | 23 | 10 |
| | 0.038 | 0 | 0 | 0 | 0 | 0 | 0 | 3 | 3 | 0 |

Die erfindungsgemäße Formulierung zeigt bessere Wirksamkeit als die SC025 (N1)

### Eingesetzte Materialien

Deltamethrin ist ein Wirkstoff von der Firma Bayer AG, Leverkusen.

Beta-Cyfluthrin ist ein Wirkstoff von der Firma Bayer AG, Leverkusen.

Cypermethrin wurde von Agros Organics BVBA, Geel, Belgien bezogen.

Break-Thru ^{®} Vibrant ist ein nichtionisches organisches Tensid von der Firma Evonik Industries AG, Essen.

Breakthru ^{®} S240 ist ein polyethermodifiziertes Trisiloxan von der Firma Evonik Industries AG, Essen.

Synergen W 06 ist ein Fettalkoholalkoxylat der Firma Clariant Produkte (Deutschland) GmbH, Frankfurt.

Genapol EP 2584 ist ein Fettalkoholalkoxylat der Firma Clariant Produkte (Deutschland) GmbH, Frankfurt.

Genapol X-060 ist ein Fettalkoholpolyglykolether der Firma Clariant Produkte (Deutschland) GmbH, Frankfurt.

Genapol XM 060 ist ein Fettalkoholpolyglykolether mit endständiger Methylgruppe basierend auf Genapol X 060 der Firma Clariant Produkte (Deutschland) GmbH, Frankfurt.

Desmodur ^{®} 44V 20 L ist ein Gemisch von polymeren Isocyanaten auf Basis von Diphenylmethan-4,4'-diisocyanat der Firma Covestro AG, Leverkusen.

Desmodur ^{®} T80 ist ein TDI (Toluol-Diisocyanat) Gemisch der Firma Covestro AG, Leverkusen.

Silcolapse ^{®} 426 R ist ein Antischaummittel der Firma Elkem Silicones Germany GmbH, Lübeck.

Silfoam ^{®} SRE ist ein Antischaummittel der Firma Wacker Chemie AG, München.

Kuraray Poval ^{®} 26-88 ist ein teilverseifter Polyvinylalkohol der Firma Kuraray Europe GmbH, Hattersheim.

Borresperse ^{®} NA ist ein Ligninsulfonat der Firma Borregaard, Sarpsborg, Norwegen.

### Standardchemikalien:

Xanthan Gum ist ein Verdickungsmittel für wässrige Systeme (verschiedene Anbieter).

Als Biozide können alle handelsüblichen und zugelassenen Biozide verwendet werden, beispielhaft seien Proxel ^{®} GXL von der Firma Lonza, und Kathon^{™} CG/ICP der Firma Dupont genannt.

Solvesso 200 ND ist ein aromatischer Kohlenwasserstoff (verschiedene Anbieter).

Diethylentriamin und Ammoniak sind Standardchemikalien und können von verschiedenen Anbietern bezogen werden.

### Vergleichsprodukte:

DelCaps 050 CS ist ein Produkt mit verkapseltem Deltamethrin der Firma INNVIGO, Warschau, Polen.
BELEM^{®} 0,8 MG ist ein Handelsprodukt mit Cypermethrin als Wirkstoff.

## Patentansprüche

1. Kapselsuspensionskonzentrate enthaltend
A) eine teilchenförmige disperse Phase, enthaltend
1) ein Reaktionsprodukt aus mindestens einer Verbindung mit gegenüber Isocyanat reaktiven Gruppen a1.1) und einem Isocyanat oder Isocyanat-Gemisch a1.2)
2) ein Pyrethroid a2.1) in einem organischen, wasserunlöslichen Lösemittel a2.2),
3) ein oder mehrere Zusatzstoffe a3.1) ausgewählt aus der Gruppe bestehend aus den Alkyl-Ethoxylaten und Alkyl-Propoxy-Ethoxylaten mit einer endständigen Hydroxylfunktion und
B) eine flüssige, wässrige Phase, enthaltend mindestens ein Schutzkolloid b1.1) sowie weitere Zusatzstoffe b1.2) ausgewählt aus der Gruppe bestehend aus den Konservierungsmitteln, Entschäumern, Kältestabilisatoren, Verdickern, pH-Stabilisatoren und Neutralisationsmitteln,
wobei die Teilchen der dispersen Phase A) bevorzugt eine mittlere Partikelgröße zwischen 1 und 50 µm aufweisen, und wobei die Kapselsuspensionskonzentrate erhältlich sind durch Reaktion der Komponenten a1.1) und a1.2) ausgehend von einer Emulsion enthaltend die Komponenten a1.1), a1.2), a2.1), a2.2), a3.1), b1.1) und b1.2), wobei
der Anteil von a1.2) zwischen 0,5 und 2,0 Gew.% liegt,
der Anteil an agrochemischem Wirkstoff a2.1) zwischen 5 und 15 Gew.%,
der Anteil an organischem Lösemittel a.2.2) zwischen 25 und 40 Gew.%,
der Anteil an Zusatzstoff a3.1) zwischen 2 und 5 Gew.%,
der Anteil an Schutzkolloiden b1.1) zwischen 0,2 und 1 Gew.%, und
der Anteil an Zusatzstoffen b1.2) zwischen 0,3 und 3 Gew. %.

2. Kapselsuspensionskonzentrate nach Anspruch 1, **dadurch gekennzeichnet, dass** das Pyrethroid ausgewählt ist aus der Gruppe, die aus Deltamethrin, Beta-Cyfluthrin, Cypermethrin und Lambda-Cyhalothrin besteht.

3. Kapselsuspensionskonzentrate nach einem der vorhergehenden Ansprüche, **dadurch gekennzeichnet, dass** Komponente a1.1) Wasser ist.

4. Kapselsuspensionskonzentrate nach einem der vorhergehenden Ansprüche, **dadurch gekennzeichnet, dass** die Teilchen der dispersen Phase A) eine mittlere Partikelgröße zwischen 2 und 15 µm aufweisen.

5. Kapselsuspensionskonzentrate nach einem der vorhergehenden Ansprüche, **dadurch gekennzeichnet, dass** das Verhältnis von agrochemischem Wirkstoff a2.1) zum Isocyanat oder zum Isocyanat-Gemisch zwischen 2:1 und 10:1 liegt.

6. Kapselsuspensionskonzentrate nach einem der vorhergehenden Ansprüche, **dadurch gekennzeichnet, dass** das organische Lösemittel (a2.2) ausgewählt ist aus der Gruppe, die aus den Dialkylnaphthalinen sowie einer Mischung aus 1-Methyl-, 2-Methylnaphthalen und Naphthalen besteht.

7. Kapselsuspensionskonzentrate nach einem der vorhergehenden Ansprüche, **dadurch gekennzeichnet, dass** der Anteil der dispersen Phase A) in Bezug auf die gesamte Formulierung zwischen 30 und 70 Gew.-% liegt.

8. Kapselsuspensionskonzentrate nach einem der vorhergehenden Ansprüche, **dadurch gekennzeichnet, dass** der Anteil an agrochemischem Wirkstoff a2.1) in Bezug auf die gesamte Formulierung zwischen 5 und 15 Gew.-% liegt.

9. Verfahren zur Herstellung der Kapselsuspensionskonzentrate nach einem der Ansprüche 1 bis 8 **dadurch gekennzeichnet, dass** es folgende Verfahrensschritte umfaßt:
1. Herstellung der organischen Phase A)
2. Herstellung der wässrigen Phase B)
3. Herstellung einer Emulsion von A) in B)
4. Ggf. Zugabe der Komponente a1.1) (wenn a1.1. nicht Wasser ist)
5. Temperschritt
6. Finalisierung

10. Verwendung der Kapselsuspensionskonzentrate nach einem der Ansprüche 1 bis 8 zur Blattapplikation.

11. Verwendung der Kapselsuspensionskonzentrate nach einem der Ansprüche 1 bis 8 zur Bodenapplikation.

## Claims

1. Capsule suspension concentrates containing
A) a particulate dispersed phase containing
1) a reaction product of at least one compound having groups reactive with isocyanate a1.1) and an isocyanate or mixture of isocyanates a1.2)
2) a pyrethroid a2.1) in an organic, water-insoluble solvent a2.2),
3) one or more additives a3.1) selected from the group consisting of alkyl ethoxylates and alkyl propoxy ethoxylates having a terminal hydroxyl function
and
B) a liquid, aqueous phase containing at least one protective colloid b1.1) as well as further additives b1.2) selected from the group consisting of preservatives, defoamers, cold stabilisers, thickeners, pH stabilisers and neutralising agents,
wherein the particles of the dispersed phase A) preferably have a mean particle size of between 1 and 50 µm, and wherein the capsule suspension concentrates are obtainable by reaction of the components a1.1) and a1.2) starting from an emulsion containing the components a1.1), a1.2), a2.1), a2.2), a3.1), b1.1) and b1.2), wherein
the proportion of a1.2) is between 0.5 and 2.0 % by weight,
the proportion of agrochemical active ingredient a2.1) is between 5 and 15% by weight,
the proportion of organic solvent a2.2) is between 25 and 40% by weight,
the proportion of additive a3.1) is between 2 and 5% by weight,
the proportion of protective colloid b1.1) is between 0.2 and 1 % by weight, and
the proportion of additives b1.2) is between 0.3 and 3 % by weight.

2. Capsule suspension concentrates according to claim 1, **characterized in that** the pyrethroid is selected from the group consisting of deltamethrin, beta-cyfluthrin, cypermethrin and lambda-cyhalothrin.

3. Capsule suspension concentrates according to any one of the preceding claims, **characterized in that** component a1.1) is water.

4. Capsule suspension concentrates according to any one of the preceding claims, **characterized in that** the particles of the dispersed phase A) have a mean particle size of between 2 and 15 µm.

5. Capsule suspension concentrates according to any one of the preceding claims, **characterized in that** the ratio of agrochemical active ingredient a2.1) to the isocyanate or mixture of isocyanates is between 2:1 and 10:1.

6. Capsule suspension concentrates according to any one of the preceding claims, **characterized in that** the organic solvent (a2.2) is selected from the group consisting of dialkylnaphthalenes and a mixture of 1-methyl-, 2-methylnaphthalene and naphthalene.

7. Capsule suspension concentrates according to any one of the preceding claims, **characterized in that** the proportion of the dispersed phase A), relative to the total formulation, is between 30 and 70 % by weight.

8. Capsule suspension concentrates according to any one of the preceding claims, **characterized in that** the proportion of agrochemical active ingredient a2.1), relative to the total formulation, is between 5 and 15 % by weight.

9. A method for producing the capsule suspension concentrates according to any one of claims 1 to 8, **characterized in that** it comprises the following process steps:
1. Preparing the organic phase A)
2. Preparing the aqueous phase B)
3. Preparing an emulsion of A) in B)
4. Optionally adding component a1.1) (if a1.1. is not water)
5. Tempering
6. Finalising

10. Use of the capsule suspension concentrates according to any one of claims 1 to 8 for foliar application.

11. Use of the capsule suspension concentrates according to any one of claims 1 to 8 for soil application.

## Revendications

1. Concentrats de suspension de capsules, contenant
A) une phase dispersée sous forme de particules, contenant
1) un produit de réaction d'au moins un composé comportant des groupes réactifs vis-à-vis des isocyanates a1.1) et d'un isocyanate ou d'un mélange d'isocyanates a1.2)
2) un pyréthroïde a2.1) dans un solvant organique insoluble dans l'eau a2.2),
3) un ou plusieurs additifs a3.1) sélectionnés parmi le groupe constitué des éthoxylates d'alkyle et des propoxyéthoxylates d'alkyle comportant une fonction hydroxyle terminale
et
B) une phase aqueuse liquide, contenant au moins un colloïde protecteur b1.1) ainsi que d'autres additifs b1.2) sélectionnés parmi le groupe constitué de conservateurs, d'agents antimousse, de stabilisants à basse température, d'épaississants, de stabilisateurs de pH et d'agents de neutralisation,
les particules de la phase dispersée A) présentant de préférence une grousseur moyenne de particule entre 1 et 50 µm, et les concentrats de suspension de capsules pouvant être obtenus par réaction des composants a1.1) et a1.2) à partir d'une émulsion contenant les composants a1.1), a1.2), a2.1), a2.2), a3.1), b1.1) et b1.2), dans laquelle
la proportion de a1.2) se situe entre 0,5 et 2,0 % en poids,
la proportion de substance active agrochimique a2.1) se situe entre 5 et 15 % en poids,
la proportion de solvant organique a.2.2) se situe entre 25 et 40 % en poids,
la proportion d'additif a3.1) se situe entre 2 et 5 % en poids,
la proportion de colloïde protecteur b1.1) se situe entre 0,2 et 1 % en poids, et
la proportion d'additifs b1.2) se situe entre 0,3 et 3 % en poids.

2. Concentrats de suspension de capsules selon la revendication 1, **caractérisés en ce que** le pyréthroïde est sélectionné parmi le groupe constitué de la deltaméthrine, de la bêta-cyfluthrine, de la cyperméthrine et de la lambda-cyhalothrine.

3. Concentrats de suspension de capsules selon l'une des revendications précédentes, **caractérisés en ce que** le composant a1.1) est de l'eau.

4. Concentrats de suspension de capsules selon l'une des revendications précédentes, **caractérisés en ce que** les particules de la phase dispersée A) présentent une grousseur moyenne comprise entre 2 et 15 µm.

5. Concentrats de suspension de capsules selon l'une des revendications précédentes, **caractérisés en ce que** le rapport entre la substance active agrochimique a2.1) et l'isocyanate ou le mélange d'isocyanates est compris entre 2:1 et 10:1.

6. Concentrats de suspension de capsules selon l'une des revendications précédentes, **caractérisés en ce que** le solvant organique (a2.2) est sélectionné parmi le groupe constitué des dialkylnaphtalènes ainsi que d'un mélange de 1-méthylnaphtalène, de 2-méthylnaphtalène et de naphtalène.

7. Concentrats de suspension de capsules selon l'une des revendications précédentes, **caractérisés en ce que** la proportion de la phase dispersée A), par rapport à la formulation totale, se situe entre 30 et 70 % en poids.

8. Concentrats de suspension de capsules selon l'une des revendications précédentes, **caractérisés en ce que** la proportion de substance active agrochimique a2.1), par rapport à la formulation totale, se situe entre 5 et 15 % en poids.

9. Procédé de fabrication des concentrats de suspension de capsules selon l'une des revendications 1 à 8, **caractérisé en ce que** le procédé comprend les étapes suivantes:
1. préparation de la phase organique A)
2. préparation de la phase aqueuse B)
3. préparation d'une émulsion de A) dans B)
4. le cas échéant, ajoutant le composant a1.1) (si a1.1. n'est pas de l'eau)
5. trempant
6. finalisant

10. Utilisation des concentrats de suspension de capsules selon l'une des revendications 1 à 8 pour une application foliaire.

11. Utilisation des concentrats de suspension de capsules selon l'une des revendications 1 à 8 pour une application au sol.
